# EUROPEAN PATENT APPLICATION

(11) **EP 3 816 815 A1**
(43) Date of publication of application: **05.05.2021**
(21) Application number: 21155027.2
(22) Date of filing: 03.02.2021
(51) Int. Cl.: G06F 16/25, G06F 16/2452

(54) **TARGET DATA OBTAINING METHOD AND APPARATUS**

(30) Priority: 04.09.2020 CN 202010921506
(71) Applicant: BEIJING BAIDU NETCOM SCIENCE TECHNOLOGY CO., LTD., No.10 Shangdi 10th Street Haidian District Beijing 100085 (CN)
(72) Inventor: XIAO, Yong, Beijing, (CN); DUAN, Liguo, Beijing, (CN)
(74) Representative: J A Kemp LLP

(57) **Abstract**

A target data obtaining method and an apparatus provided by embodiments of the present application relate to the technical field of cloud computing. A specific implementation is that: when a cloud server receives a structured query language SQL query statement, which is sent by a client and used to indicate target data that needs to be obtained, the cloud server does not directly issue all data to the client, but first generates an abstract structured syntax tree corresponding to the SQL query statement; and screens all stored data according to the abstract structured syntax tree to obtain the target data; and then sends the target data to the client. Compared with the prior art, in which all data are issued to client, the amount of issued data is effectively reduced, thereby reducing network resources consumed by the cloud server. In addition, for the client, compared with the prior art, in which all data need to be downloaded to the client, the amount of downloaded data is effectively reduced and network resources consumed by the client can also be reduced.

## Description

### TECHNICAL FIELD

Embodiments of the present application relate to the technical field of cloud computing in data processing technology, and in particular, to a target data obtaining method and an apparatus.

### BACKGROUND TECHNIQUE

With the explosive growing of data volume, greater data storage pressure has been brought to enterprises. The popularity of cloud computing technology has made data storage cloud a mainstream choice. Cloud storage can provide enterprises with safe, reliable, massively scalable, data disaster-tolerant storage services but lower costs.

In the prior art, if an enterprise wants to perform big data analysis on some data stored in the cloud, such as log files, it can only request all data stored in the cloud from a cloud server through an object-stored GetObject interface, the cloud server will issue all the data requested by the enterprise to an enterprise terminal through network resources. After the enterprise terminal obtains all the data, the enterprise screens the data needs to be analyzed out from all the data through manual search manner.

However, when the above method is adopted, all the data needs to be issued to the enterprise terminal through the network resources, so that it needs to consume a large amount of network resources.

### SUMMARY

Embodiments of the present application provide a target data obtaining method and an apparatus, which reduce the consumption of network resources.

In a first aspect, an embodiment of the present application provides a target data obtaining method that is applied to a cloud server. The target data obtaining method may include:
when receiving a structured query language SQL query statement, which is sent by a client and used to indicate target data that needs to be obtained, parsing the SQL query statement to generate an abstract structured syntax tree corresponding to the SQL query statement;
screening all stored data according to the abstract structured syntax tree to obtain the target data; and
sending the target data to the client.

In a second aspect, an embodiment of the present application provides a target data obtaining apparatus that is applied to a cloud server. The target data obtaining apparatus may include:
a parsing module, configured to, when a structured query language SQL query statement, which is sent by a client and used to indicate target data that needs to be obtained, is received, parse the SQL query statement to generate an abstract structured syntax tree corresponding to the SQL query statement;
a screening module, configured to screen all stored data according to the abstract structured syntax tree to obtain the target data; and
a sending module, configured to send the target data to the client.

In a third aspect, an embodiment of the present application also provides an electronic device, which may include at least one processor; and a memory communicatively connected with the at least one processor; wherein,
the memory stores instructions that are executable by the at least one processor, and the instructions are executed by the at least one processor to enable the at least one processor to execute the target data obtaining method described in the first aspect.

In a fourth aspect, an embodiment of the present application also provides a computer program product, which may include a computer program, the computer program is stored in a readable storage medium, and at least one processor of an electronic device can read the computer program from the readable storage medium, the at least one processor executes the computer program, so that the electronic device executes the method described in the first aspect.

In a fifth aspect, an embodiment of the present application also provides a non-transitory computer-readable storage medium storing computer instructions, where the computer instructions are configured to enable the computer to execute the target data obtaining method described in the first aspect.

According to the technical solution of the present application, when a cloud server receives a structured query language SQL query statement, which is sent by a client and used to indicate target data that needs to be obtained, the cloud server does not directly issue all data to the client, but first generates an abstract structured syntax tree corresponding to the SQL query statement; and screens all stored data according to the abstract structured syntax tree to obtain the target data; and then sends the target data to the client. Compared with the prior art, in which all data are issued to client, the amount of issued data is effectively reduced, thereby reducing network resources consumed by the cloud server. In addition, for the client, compared with the prior art, in which all data need to be downloaded to the client, the amount of downloaded data is effectively reduced and network resources consumed by the client can also be reduced.

It should be understood that the content described in this section is not intended to identify the key or important features of the embodiments of the present application, nor is it intended to limit the scope of the present application. Other features of the present application will become easily understood through the following description.

### BRIEF DESCRIPTION OF DRAWINGS

The accompanying drawings are used to better understand the solution and do not constitute a limitation to the present application, where:
FIG. 1 is a schematic flowchart of a target data obtaining method according to embodiment 1 of the present application;
FIG. 2 is a schematic flowchart of a target data obtaining method according to embodiment 2 of the present application;
FIG. 3 is a schematic framework diagram of a target data obtaining method according to embodiment 3 of the present application;
FIG. 4 is a schematic structural diagram of a target data obtaining apparatus according to embodiment 4 of the present application; and
FIG. 5 is a block diagram of an electronic device according to a target data obtaining method according to an embodiment of the present application.

### DESCRIPTION OF EMBODIMENTS

Hereinafter, the exemplary embodiments of the present application will be described in conjunction with the accompanying drawings, which include various details of the embodiments of the present application to facilitate understanding, and should be regarded as merely exemplary. Therefore, those of ordinary skill in the art should realize that various changes and modifications can be made to the embodiments described herein without departing from the scope and spirit of the present application. Likewise, descriptions of well-known functions and structures are omitted in the following description for clarity and conciseness.

In the embodiments of the present application, "at least one" refers to one or more, and "multiple" refers to two or more. "And/or" describes the association relationship of the associated objects, indicating that three relationships may exist. For example, A and/or B can refer to three conditions: A exists solely, A and B exist at the same time, or B exists solely, wherein A and B can be singular or plural. In the word description of the present application, the character "/" generally indicates that the contextual objects are in an "or" relationship.

The target data obtaining method provided by the embodiments of the present application can be applied to the field of cloud computing technology, or data query scenarios of a structured query language (SQL) in other technical field. As such, SQL is a special-purposed programming language, a database query and program design language, which is used to access data, and query, update and manage relational database systems. In the prior art, if an enterprise wants to perform big data analysis on some data stored in the cloud, such as log files, it can only request all data stored in the cloud from a cloud server through an object-stored GetObject interface. After the cloud server receives the data query request, the cloud server will issue all the data requested by the enterprise to an enterprise terminal through network resource. Correspondingly, the enterprise terminal needs to download all the data issued by the cloud server through the network resources to the local, and screen the data needs to be analyzed out from all the data by manual search manner after receiving all the data. However, when the above method is adopted, all the data needs to be issued to the enterprise terminal through the network resources, so that it needs to consume a large amount of network resources.

Since the consumption of network resources is mainly caused by the large amount of data issued by the cloud server, in order to reduce the consumption of network resources, it can attempt to reduce the amount of data that the cloud server needs to issue. Based on the technical concept, it is easy to think of the technical solution that: staffs of the enterprise can login account in the cloud server, look over all the data in the cloud server directly, and screen out the data that need to be analyzed from all the data through manual search manner. However, although the consumption of network resources can be reduced when this solution is adopted, it still requires manual search to screen out the data need to be analyzed from all the data, resulting in low data obtaining efficiency.

Based on the above description, in order to reduce the consumption of network resources, after an SQL parser in the cloud server receives the SQL query statement sent by the client, it can attempt to sink the data screening operation to an object storage service layer through an SelectObject interface to realize data query substitution, and only return the data needed by the client, which can save network resources and make full use of computing resources such as a memory of a storage layer node and central processing unit (CPU) in the cloud server. Based on this concept, the embodiments of the present application provide a target data obtaining method. The target data obtaining method may specifically include: when the cloud server receives a structured query language SQL query statement, which is sent by the client and used to indicate target data that needs to be obtained, the cloud server does not directly send all the data to the client, but first parse the SQL query statement to generate an abstract structured syntax tree corresponding to the SQL query statement; and screen all stored data according to the abstract structured syntax tree to obtain the target data; and then send the target data to the client.

It can be seen that in the target data obtaining method provided by the embodiments of the present application, when a structured query language SQL query statement, which is sent by a client and used to indicate target data that needs to be obtained, is received, all data are not directly issued to the client, but an abstract structured syntax tree corresponding to the SQL query statement is first generated; and all stored data are screened according to the abstract structured syntax tree to obtain the target data; and then the target data is sent to the client. Compared with the prior art, in which all data are issued to client, the amount of issued data is effectively reduced, thereby reducing network resources consumed by the cloud server. In addition, for the client, compared with the prior art, in which all data need to be downloaded to the client, the amount of downloaded data is effectively reduced and network resources consumed by the client can also be reduced.

Before describing the technical solutions provided by the embodiments of the present application in detail, the concept of the abstract syntax tree in the embodiments of the present application is introduced. The abstract syntax tree (AST), which is also known as syntax tree, is a tree-like representation of an abstract syntax structure of source codes, the source codes herein are specifically refers to source codes of a programming language. For the abstract syntax tree, each node on the tree represents a structure of the source codes.

After introducing the concept of the abstract syntax tree, the method for obtaining applet data provided by the present application will be described below in detail through specific embodiments. It can be understood that the following specific embodiments can be combined with each other, and the same or similar concepts or processes may not be repeated in some embodiments.

### Embodiment 1

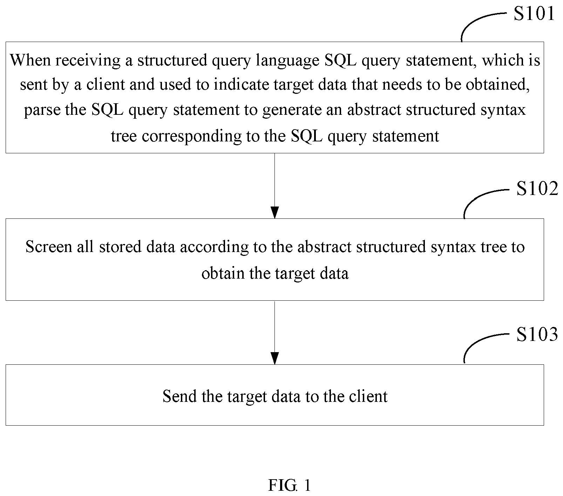

FIG. 1 is a schematic flowchart of a target data obtaining method according to embodiment 1 of the present application. The target data obtaining method may be executed by a software and/or hardware apparatus. For example, the hardware apparatus may be a target data obtaining apparatus, the target data obtaining apparatus may be a cloud server. Exemplary, reference is made to FIG. 1, the target data obtaining method may include:
S101, when receiving a structured query language SQL query statement, which is sent by a client and used to indicate target data that needs to be obtained, parsing the SQL query statement to generate an abstract structured syntax tree corresponding to the SQL query statement.

Exemplary, when the cloud server receives the structured query language SQL query statement sent by the client, the cloud server can receive data query request message sent by the client, which may include the SQL query statement, and obtain the SQL query statement, where the SQL query statement is used to indicate the target data that the client needs to obtain.

After the cloud server obtains the SQL query statement, since an SQL parser thereof not only needs to support a standard SQL syntax rule, but it also need to support customized keyword and syntax based on business scenarios. As such, a lexical parser is realized by using a byte scanner, which supports common FROM, WHERE, IN, BETWEEN, etc. Therefore, the SQL parser of the cloud server can first perform lexical analysis on the SQL query statement to obtain a string list corresponding to the SQL query statement; and convert the string list according to an SQL syntax rule to obtain the abstract structured syntax tree. In addition, a hierarchical structure of the abstract syntax tree can be represented by a flexible data structure, which can guarantee the completeness of the syntax and the accuracy of the calculation result to a certain extent.

After the SQL parser of the cloud server generates the abstract structured syntax tree corresponding to the SQL query statement, the SQL parser can send the abstract structured syntax tree corresponding to the SQL query statement to a data selector in the cloud server to enable the data selector to execute S102.

S102, screen all stored data according to the abstract structured syntax tree to obtain the target data.

After the data picker of the cloud server receives the abstract structured syntax tree corresponding to the SQL query statement, the data picker can screen all the data stored in the cloud by the client according to the abstract structured syntax tree to obtain the target data needed by the client, and send the target data to the client, that is, perform the following S103.

In the embodiment of the present application, it is exactly because when the client requests data from the cloud server, the cloud server does not directly issue all the data to the client, but first screen all the stored data according to the generated abstract structured syntax tree, and only send the target data obtained by screening to the client. Compared with the prior art, in which all data are issued to client, the amount of issued data is effectively reduced, thereby reducing network resources consumed by the cloud server. In addition, for the client, compared with the prior art, in which all data need to be downloaded to the client, the amount of downloaded data is effectively reduced and network resources consumed by the client can also be reduced.

S103, send the target data to the client.

Exemplary, in conjunction with the above description in S101, when the cloud server obtains the SQL query statement by receiving the data request message sent by the client, correspondingly, after the cloud server obtains the target data needed by the client by screening, the cloud server can send the target data to the client through a data response message, where the target data can be sent to the client by being carried in the data response message, so that the client can obtain the target data. Exemplary, the data response message can be a Records message, a Continue message. Of course, it can also be an End message, or the like.

It can be seen that, in the embodiment of the present application, when a cloud server receives a structured query language SQL query statement, which is sent by a client and used to indicate target data that needs to be obtained, the cloud server does not directly issue all data to the client, but first generates an abstract structured syntax tree corresponding to the SQL query statement; and screens all stored data according to the abstract structured syntax tree to obtain the target data; and then sends the target data to the client. Compared with the prior art, in which all data are issued to client, the amount of issued data is effectively reduced, thereby reducing network resources consumed by the cloud server. In addition, for the client, compared with the prior art, in which all data need to be downloaded to the client, the amount of downloaded data is effectively reduced and network resources consumed by the client can also be reduced.

Based on the embodiment shown in FIG. 1 above, in order to facilitate the understanding of how to screen all the stored data according to the abstract structured syntax tree to obtain the target data in the above S102, a detailed description of how to screen all the stored data according to the abstract structured syntax tree to obtain the target data is described in the following embodiment 2.

### Embodiment 2

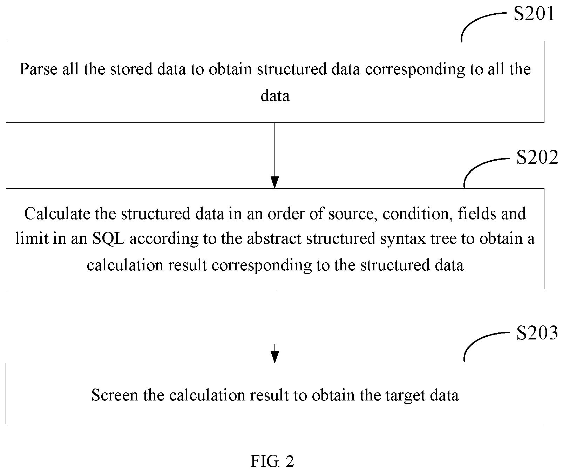

FIG. 2 is a schematic flowchart of a target data obtaining method according to embodiment 2 of the present application. The target data obtaining method can also be executed by a software and/or hardware apparatus. For example, the hardware apparatus may be a target data obtaining apparatus, the target data obtaining apparatus may be a cloud server. Exemplary, reference is made to FIG. 2. The target data obtaining method may also include:
S201, parse all the stored data to obtain structured data corresponding to all the data.

Before the data picker of the cloud server screens all the stored data according to the abstract structured syntax tree, and obtains the target data, the data reader in the cloud server needs to read all the data stored in the cloud by the client with a granularity of 4M per slice from a backend, where all the data may include two types of structured file data, namely Comma-Separated Values (CSV), and JavaScript Object Notation (JSON), and sends all the read data to a data parser in the cloud server; after the data parser receives all the data, the data parser can parse all the data to obtain the corresponding structured data of all the data. Exemplary, the data reader can be a JSON reader or a CSV reader. Of course, the data reader can also be a parquest reader.

Exemplary, when all the data includes JSON-type structured file data, the data parser uses a self-developed JSON streaming parsing screener to sequentially scan each slice of an object in streaming manner, maintain a global scan status, and process complex scenarios such as data slice-to-slice and data truncation, to ensure that data with a specified key path is selected from a JSON object. It can be understood that, in the embodiment of the present application, not only a processing of JSON in two forms of LINES and DOC is supported, but also an extraction of specified key data from a JSON file containing a nested object and a nested array is supported. In addition, when there is data that includes CSV-type structured file data, the data can also be split by column and row according to different request parameters, thereby obtaining corresponding structured data.

After the data parser of the cloud server performs parsing to obtain the structured data corresponding to all the data, the data parser can send the structured data to the data picker in the cloud server to cause the data picker to execute the following S202.

S202, calculate the structured data in an order of source, condition, fields and limit in an SQL according to the abstract structured syntax tree to obtain a calculation result corresponding to the structured data.

Exemplary, when the data picker in the cloud server calculates the structured data in an order of source, condition, fields and limit in an SQL to obtain a calculation result corresponding to the structured data, if the structured data corresponds to the same type, then the data picker can calculate the structured data in the order of source, condition, fields and limit in the SQL to obtain the calculation result corresponding to the structured data. On the contrary, if the structured data corresponds to different types, then the data picker needs to perform type alignment or forced upward conversion on different data types. For example, types corresponding to the structured data can be unified to obtain processed structured data; and after it is determined that the types of the structured data are aligned, the processed structured data is calculated according to the order of source, condition, fields and limit in the SQL, which not only guarantees an accuracy of a subsequent calculation result to a certain extent, but also solves the problem of inaccuracy of data aggregation operation and floating-point number, which can only be approximately equal within a certain precision.

Exemplary, when the data picker in the cloud server calculates the structured data in the order of source, condition, fields and limit in the SQL according to the abstract structured syntax tree to obtain the calculation result corresponding to the structured data, the data picker can calculate and screen data according to the abstract structured syntax tree AST, read specific CSV and JSON file data according to an SQL statement execution order of source -> condition -> field -> restriction, and then perform vector calculation by parsing the data structure of the abstract structured syntax tree, and traverse the condition tree in post-order to obtain the calculation result corresponding to the structured data.

After calculating the structured data in the order of source, condition, fields and limit in the SQL to obtain the calculation result corresponding to the structured data, the calculation result can be screened, thereby obtaining the target data that the client needs to obtain, that is, the following S203 can be executed.

S203, screen the calculation result to obtain the target data.

It can be seen that in the embodiment of the present application, for the cloud server, after receiving the SQL query request sent by the client, it does not directly issue all the data stored in the cloud by the client to the client, but first calculate the structured data in the order of source, condition, fields and limit in the SQL according to the generated abstract structured syntax tree to obtain the calculation result corresponding to the structured data; and screen the calculation result to obtain the target data. That is, in the embodiment of the present application, the screening of object storage data is integrated into a storage service layer, which can not only reduce the network resources consumed by the cloud server for sending data, but can also reduce network bandwidth and delay of the client for downloading data, and save the resources such as CPU and memory consumed by customers for screening the data, thereby reducing the application cost required for the client to access the data in cloud storage.

In order to facilitate the understanding of the target data obtaining method provided by the embodiments of the present application, the target data obtaining method provided by the embodiments of the present application will be described in detail through the following specific embodiment 3.

### Embodiment 3

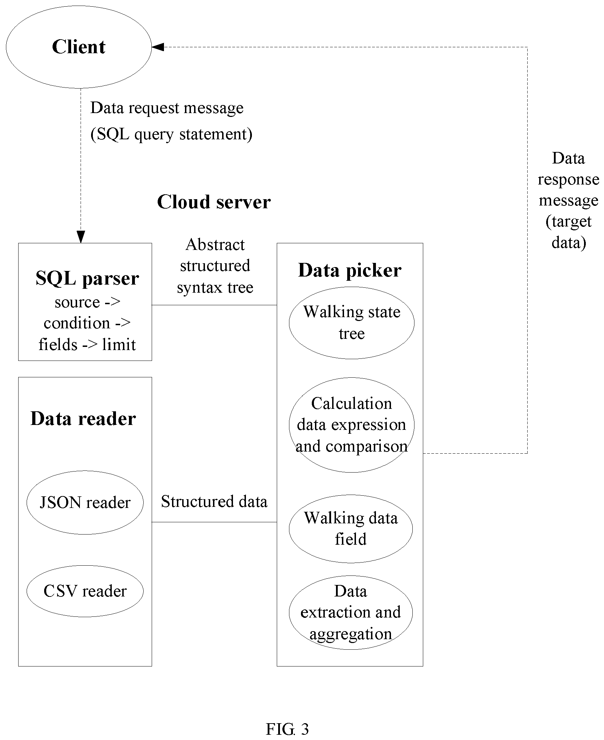

FIG. 3 is a schematic diagram of a target data obtaining method according to embodiment 3 of the present application. Exemplary, reference is made to FIG. 3, when an enterprise wants to analyze some of the data stored in the cloud, such as target data, the enterprise can send a data request message to a cloud server through a client. The data request message includes an SQL query statement that is used to indicate the target data that needs to be obtained. Correspondingly, after the cloud server receives the SQL query statement, a SQL parser in the cloud server first performs lexical analysis on the SQL query statement to obtain a string list corresponding to the SQL query statement; and converts the string list according to an SQL syntax rule to obtain an abstract structured syntax tree, and send the generated abstract structured syntax tree to a data picker. A data reader in the cloud server reads all the data stored in the cloud by the client with a granularity of 4M per slice from a backend, and send all the read data to a data parser in the cloud server. After the data parser receives all the data, the data parser can parse all the data to obtain the corresponding structured data of all the data, and send the structured data to the data picker in the cloud server. The data picker calculates and screens data according to the abstract structured syntax tree AST, reads specific CSV and JSON file data according to an SQL statement execution order of source -> condition -> field -> restriction, and then performs vector calculation by parsing the data structure of the abstract structured syntax tree, and traverses the condition tree in post-order to obtain the calculation result corresponding to the structured data; then screens the calculation result to obtain the target data that the client needs to obtain; and then sends a data response message to the client including the target data, so that the client obtains the target data. Compared with the prior art, in which all data are issued to client, the amount of issued data is effectively reduced, thereby reducing network resources consumed by the cloud server. In addition, for the client, compared with the prior art, in which all data need to be downloaded to the client, the amount of downloaded data is effectively reduced and network resources consumed by the client can also be reduced.

### Embodiment 4

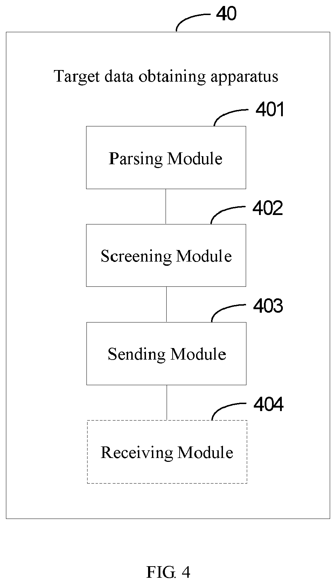

FIG. 4 is a schematic structural diagram of a target data obtaining apparatus 40 according to embodiment 4 of the present application, which is applied to a cloud server. Exemplary, reference is made to FIG. 4, the target data obtaining apparatus 40 may include:
a parsing module 401, configured to, when a structured query language SQL query statement, which is sent by a client and used to indicate target data that needs to be obtained, is received, parse the SQL query statement to generate an abstract structured syntax tree corresponding to the SQL query statement;
a screening module 402, configured to screen all stored data according to the abstract structured syntax tree to obtain the target data; and
a sending module 403, configured to send target data to the client.

Optionally, the parsing module 401 is further configured to parse all the stored data to obtain structured data corresponding to all the data; and
the screening module 402 is specifically configured to screen the structured data according to the abstract structured syntax tree to obtain the target data.

Optionally, the screening module 402 is specifically configured to calculate the structured data in an order of source, condition, fields and limit in an SQL according to the abstract structured syntax tree to obtain a calculation result corresponding to the structured data; and screen the calculation result to obtain the target data.

Optionally, the screening module 402 is specifically configured to unify types corresponding to the structured data to obtain processed structured data; and calculate the processed structured data according to the order of source, condition, fields and limit in the SQL.

Optionally, the parsing module 401 is specifically configured to perform lexical analysis on the SQL query statement to obtain a string list corresponding to the SQL query statement; and convert the string list according to an SQL syntax rule to obtain the abstract structured syntax tree.

Optionally, the target data obtaining apparatus 40 further includes a receiving module 404;
where the receiving module 404 is configured to receive a data query request message sent by the client; where the data query request message includes the SQL query statement.

The target data obtaining apparatus 40 provided by the embodiment of the present application can execute the technical solution of the target data obtaining method in any of the above-mentioned embodiments, the implementation principles and beneficial effects thereof are similar to these of the target data obtaining method, reference can be made to the implementation principles and beneficial effects of the target data obtaining method, which is not repeated here.

According to the embodiments of the present application, the present application further provides an electronic device and a readable storage medium.

According to the embodiments of the present application, the present application further provides a computer program product, which may includes: a computer program, the computer program is stored in a readable storage medium, and at least one processor of the electronic device can read the computer program from the readable storage medium, the at least one processor executes the computer program to enable the electronic device execute the solution provided in any one of the above embodiments.

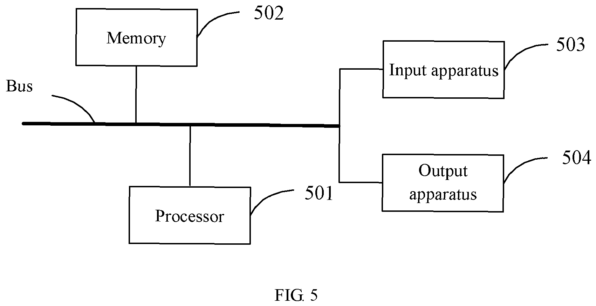

As shown in FIG. 5, FIG. 5 is a block diagram of an electronic device according to a target data obtaining method according to an embodiment of the present application. The electronic device is intended to represent various forms of digital computers, such as a laptop computer, a desktop computer, a workbench, a personal digital assistant, a server, a blade server, a mainframe computer, and other suitable computers. The electronic device may also represent various forms of mobile devices, such as a personal digital processing, a cellular phone, a smart phone, a wearable device, and other similar computing devices. The components shown herein, their connections and relationships, and their functions are merely examples, and are not intended to limit implementations of the present application described and/or claimed herein.

As shown in FIG. 5, the electronic device includes: one or more processors 501, memory 502, and an interface for connecting components, including a high-speed interface and a low-speed interface. The components are connected to each other via different buses, and can be installed on a public motherboard or installed in other ways as desired. The processor may process instructions executed within the electronic device, including instructions that stored in or on the memory to display GUI graphical information on an external input/output device (such as a display device coupled to the interface). In other embodiments, multiple processors and/or multiple buses can be used together with multiple memories, if desired. Similarly, multiple electronic devices can be connected, and each device provides some necessary operations (for example, as a server array, a group of blade servers, or a multi-processor system). In FIG. 5, one processor 501 is taken as an example.

The memory 502 is a non-transitory computer readable storage medium provided in the present application. The memory is stored with instructions executable by at least one processor, enabling at least one processor to execute the target data obtaining method provided in the present application. The non-transitory computer readable storage medium of the present application is stored with computer instructions, which are configured to enable a computer to execute the target data obtaining method provided in the present application.

As a kind of non-transitory computer readable storage medium, the memory 502 may be configured to store non-transitory software programs, non-transitory computer executable programs and modules, such as program instructions/modules corresponding to the target data obtaining method in the embodiments of the present application (for example, the parsing module 401, the screening module 402, the sending module 403 and the receiving module 404 shown in FIG. 4). The processor 501 executes various functional applications and data processing of the server by running the non-transitory software programs, instructions, and modules stored in the memory 502, that is, realizing the target data obtaining method in the above mentioned method embodiments.

The memory 502 may include a program storage area and a data storage area, where the program storage area may be stored with an application program required by an operating system and at least one function, the data storage area may be stored with data created according to use of the electronic device for the target data obtaining method, and the like. In addition, the memory 502 may include a high-speed random access memory, and may also include a non-transitory memory, such as at least one magnetic disk storage device, a flash memory device, or other non-transitory solid-state storage devices. In some embodiments, the memory 502 optionally includes remote memories arranged relative to the processor 501, and these remote memories can be connected to the electronic device for the target data obtaining method through a network. Examples of the above network include, but are not limited to, Internet, an intranet, a local area network, a mobile communication network, and a combination thereof.

The electronic device of the target data obtaining method may further include: an input apparatus 503 and an output apparatus 504. The processor 501, the memory 502, the input apparatus 503 and the output apparatus 504 may be connected through a bus or connected in other ways. In FIG. 5, a connection through a bus is taken as an example.

The input device 503 may receive input digital or character information, and generate key signal input related to user settings and function control of the electronic device for the target data obtaining method, such as a touch screen, a keypad, a mouse, a trackpad, a touchpad, an indicator bar, one or more mouse buttons, a trackball, a joystick and other input devices. The output device 504 may include a display device, an auxiliary lighting device (e. g., an LED), a tactile feedback device (e. g., a vibration motor), and the like. The display device may include, but is not limited to, a liquid crystal display (LCD), a light emitting diode (LED) display, and a plasma display. In some implementations, the display device may be the touch screen.

Various implementations of the system and the technique described herein may be implemented in a digital electronic circuit system, an integrated circuit system, an ASIC (application specific integrated circuit), a computer hardware, a firmware, a software, and/or a combination thereof. These various implementations may include: implementations implemented in one or more computer programs, where the one or more computer programs may be executed and/or interpreted on a programmable system including at least one programmable processor, and the programmable processor may be a dedicated or generic programmable processor, which may receive data and instructions from a storage system, at least one input device and at least one output device, and transmit the data and the instructions to the storage system, the at least one input device and the at least one output device.

These computer programs (also known as programs, software, software applications, or codes) include machine instructions of the programmable processor, and may be implemented using a high-level process and/or an object-oriented programming language, and/or an assembly/machine language. As used herein, the terms such as "machine readable medium" and "computer readable medium" refer to any computer program product, device, and/or equipment (e.g., a magnetic disk, an optical disk, a memory, a programmable logic device (PLD)) configured to provide machine instructions and/or data to the programmable processor, including a machine readable medium that receives machine instructions as machine readable signals. The term "machine readable signal" refers to any signal configured to provide machine instructions and/or data to the programmable processor.

For provision of interaction with a user, the system and the technique described herein may be implemented on a computer, and the computer has: a display device for displaying information to the user (such as a CRT (cathode ray tube) or an LCD (liquid crystal display) monitor); and a keyboard and a pointing device (such as a mouse or a trackball), the user may provide an input to the computer through the keyboard and the pointing device. Other kinds of devices may also be used to provide the interaction with the user; for example, feedback provided to the user may be any form of sensor feedback (e.g., visual feedback, auditory feedback, or tactile feedback); and may receive the input from the user in any form (including an acoustic input, a voice input, or a tactile input).

The system and the technique described herein may be implemented in a computing system that includes back-end components (for example, as a data server), or a computing system that includes intermediate components (for example, an application server), or a computing system that includes front-end components (for example, a user computer with a graphical user interface or a web browser through which the user may interact with the implementations of the systems and the techniques described herein), or a computing system that includes any combination of the back-end components, the intermediate components, or the front-end components. The components of the system may be interconnected by any form or medium of digital data communications (e.g., a communication network). Examples of the communication network include: a local area network (LAN), a wide area network (WAN), and Internet.

The computing system may include a client and a server. The client and the server are generally far away from each other, and generally interact with each other through the communication network. A relationship between the client and the server is generated by computer programs running on a corresponding computer and having a client-server relationship.

According to the technical solution of the embodiments of the present application, when a cloud server receives a structured query language SQL query statement, which is sent by a client and used to indicate target data that needs to be obtained, the cloud server does not directly issue all data to the client, but first generates an abstract structured syntax tree corresponding to the SQL query statement; and screens all stored data according to the abstract structured syntax tree to obtain the target data; and then sends the target data to the client. Compared with the prior art, in which all data are issued to client, the amount of issued data is effectively reduced, thereby reducing network resources consumed by the cloud server. In addition, for the client, compared with the prior art, in which all data need to be downloaded to the client, the amount of downloaded data is effectively reduced and network resources consumed by the client can also be reduced.

It should be understood that the various forms of processes shown above can be used, and reordering, addition, or deletion of a step can be performed. For example, the steps recorded in the present application can be executed concurrently, sequentially, or in different orders, provided that desirable results of the technical solutions disclosed in the present application could be achieved, and there is no limitation herein.

The above specific embodiments do not constitute a limitation on the protection scope of the present application. Those skilled in the art should understand that various modifications, combinations, sub-combinations, and replacements can be made according to design requirements and other factors. Any modification, equivalent replacement and improvement made within the spirit and principle of the present application shall be included in the protection scope of the present application.

## Claims

1. A target data obtaining method, applied to a cloud server and comprising:
when receiving a structured query language, SQL, query statement, which is sent by a client and used to indicate target data that needs to be obtained, parsing (S101) the SQL query statement to generate an abstract structured syntax tree corresponding to the SQL query statement;
screening (S102) all stored data according to the abstract structured syntax tree to obtain the target data; and
sending the (S103) target data to the client.

2. The method according to claim 1, wherein the screening (S102) all stored data according to the abstract structured syntax tree to obtain the target data, comprises:
parsing (S201) all the stored data to obtain structured data corresponding to all the stored data; and
screening the structured data according to the abstract structured syntax tree to obtain the target data.

3. The method according to claim 2, wherein the screening (S102) the structured data according to the abstract structured syntax tree to obtain the target data, comprises:
calculating (S202) the structured data in an order of source, condition, fields and limit in an SQL according to the abstract structured syntax tree to obtain a calculation result corresponding to the structured data; and
screening (S203) the calculation result to obtain the target data.

4. The method according to claim 3, wherein the structured data corresponds to different types, and the calculating (S202) the structured data in an order of source, condition, fields and limit in an SQL, comprises:
unifying types corresponding to the structured data to obtain processed structured data; and
calculating the processed structured data according to the order of source, condition, fields and limit in the SQL.

5. The method according to any one of claims 1-4, wherein the parsing (S101) the SQL query statement to generate an abstract structured syntax tree corresponding to the SQL query statement, comprises:
performing lexical analysis on the SQL query statement to obtain a string list corresponding to the SQL query statement; and
converting the string list according to an SQL syntax rule to obtain the abstract structured syntax tree.

6. The method according to any one of claims 1-4, further comprising:
receiving a data query request message sent by the client; wherein the data query request message comprises the SQL query statement.

7. A target data obtaining apparatus (40), applied to a cloud server and comprising:
a parsing module (401), configured to, when a structured query language, SQL, query statement, which is sent by a client and used to indicate target data that needs to be obtained, is received, parse the SQL query statement to generate an abstract structured syntax tree corresponding to the SQL query statement;
a screening module (402), configured to screen all stored data according to the abstract structured syntax tree to obtain the target data; and
a sending module (403), configured to send the target data to the client.

8. The apparatus (40) according to claim 7, wherein the parsing module (401) is further configured to parse all the stored data to obtain structured data corresponding to all the stored data; and
the screening module (402) is specifically configured to screen the structured data according to the abstract structured syntax tree to obtain the target data.

9. The apparatus (40) according to claim 8, wherein the screening module (402) is specifically configured to calculate the structured data in an order of source, condition, fields and limit in an SQL according to the abstract structured syntax tree to obtain a calculation result corresponding to the structured data; and screen the calculation result to obtain the target data.

10. The apparatus (40) according to claim 9, wherein the screening module (402) is specifically configured to unify types corresponding to the structured data to obtain processed structured data; and calculate the processed structured data according to the order of source, condition, fields and limit in the SQL.

11. The apparatus (40) according to any one of claims 7-10, wherein the parsing module (401) is specifically configured to perform lexical analysis on the SQL query statement to obtain a string list corresponding to the SQL query statement; and convert the string list according to an SQL syntax rule to obtain the abstract structured syntax tree.

12. The apparatus (40) according to any one of claims 7-10, further comprising a receiving module (404);
wherein the receiving module (404) is configured to receive a data query request message sent by the client; wherein the data query request message comprises the SQL query statement.

13. An electronic device, comprising:
at least one processor (501); and
a memory (502) communicatively connected to the at least one processor (501); wherein,
the memory (502) stores instructions that are executable by the at least one processor (501), and the instructions are executed by the at least one processor (501) to enable the at least one processor (501) to execute the target data obtaining method according to any one of claims 1-6.

14. A non-transitory computer-readable storage medium storing computer instructions, wherein the computer instructions are configured to enable the computer to execute the target data obtaining method according to any one of claims 1-6.

15. A computer program product, comprising a computer program, which when execute by the at least one processor, cause the electronic device to perform the method according to any one of claims 1-6.
